# EUROPÄISCHE PATENTANMELDUNG

(11) **EP 3 753 459 A1**
(43) Veröffentlichungstag der Anmeldung: **23.12.2020**
(21) Anmeldenummer: 20177875.0
(22) Anmeldetag: 02.06.2020
(51) Int. Cl.: A47J 37/07, F24B 1/181, F24B 1/182, F24B 1/189, F24B 1/191, F24B 7/00, F24C 1/16, F24C 7/00

(54) **AUFSATZ FÜR EINE WÄRMEQUELLE, KIT MIT EINER WÄRMEQUELLE UND EINEM SOLCHEN AUFSATZ SOWIE VERWENDUNG EINES SOLCHEN AUFSATZES**

(30) Priorität: 17.06.2019 DE 202019103389 U
(71) Anmelder: Monolith GmbH, 45127 Essen (DE)
(72) Erfinder: Loibl, Bernd, 79771 Klettgau (DE)
(74) Vertreter: Paul & Albrecht Patentanwälte PartG mbB

(57) **Zusammenfassung**

Die Erfindung betrifft einen Aufsatz (1) für eine Wärmequelle (2), der ein Gestell (3) und ein Gehäuse (4) aufweist, das durch das Gestell (3) oberhalb einer Wärmequelle (2) platzierbar ist, wobei das Gehäuse (4) an seiner dem Gestell (3) zugewandten Unterseite einen Gehäuseboden (7) aufweist, in dem mindestens eine Warmlufteinlassöffnung (11) ausgebildet ist, und an seiner gegenüberliegenden Oberseite eine mit dem Gehäuseboden (7) verbundene Gehäusedecke (13) aufweist, und das Gehäuse (4) seitlich mindestens eine Warmluftauslassöffnung (15) umfasst, wobei der Aufsatz (1) einen aktiven Lüfter (16) aufweist, und der aktive Lüfter (16) und das Gehäuse (4) derart ausgebildet und relativ zueinander angeordnet sind, dass mit Hilfe des aktiven Lüfters (16) von der Wärmequelle (2) bereitgestellte Warmluft durch die mindestens eine Warmlufteinlassöffnung (11) ins Innere des Gehäuses (4) und in Richtung der Gehäusedecke (13) gefördert werden kann, um zu bewirken, dass die Warmluft an der Gehäusedecke (13) umgelenkt wird und das Gehäuse (4) über die wenigstens eine Warmluftauslassöffnung (15) seitlich nach außen gerichtet verlässt. Darüber hinaus betrifft die Erfindung ein Kit (28) und eine Verwendung eines Aufsatzes.

## Beschreibung

Die vorliegende Erfindung betrifft einen Aufsatz für eine Wärmequelle, insbesondere feuerbasierte und/oder strombasierte Wärmequelle, die ausgebildet ist, um nach oben steigende Warmluft bereitzustellen, bevorzugt für einen Terrassenkamin, einen Grill, einen Feuertisch und/oder eine Feuerschale. Des Weiteren betrifft die Erfindung ein Kit mit einer Wärmequelle und einem solchen Aufsatz. Darüber hinaus betrifft die Erfindung eine Verwendung eines solchen Aufsatzes.

Aufsätze für Wärmequellen unterschiedlichster Art sind allgemein bekannt. Zum Beispiel gibt es Aufsätze zum Verwandeln einer Feuerschale in eine Feuertonne. Solche Aufsätze umfassen meist eine zylindermantelförmige Ringwand, die auf eine flache Feuerschale aufgesteckt wird. Für Grills sind Aufsätze zum Grillen eines Hähnchens oder zum Backen von Pizza im Fachhandel erhältlich, um nur einige wenige Beispiele zu nennen.

Alle bereits vorbekannten Aufsätze dienen dem Zweck, den Funktionsumfang bereits vorhandener Wärmequellen zu erweitern, um die Wärmequellen vielseitiger einsetzbar zu machen.

Der Erfindung liegt daher die Aufgabe zugrunde, einen weiteren Aufsatz für eine Wärmequelle bereitzustellen, der es ermöglicht, die von der Wärmequelle aufsteigende Warmluft vielfältiger nutzbar zu machen.

Diese Aufgabe wird erfindungsgemäß bei einem Aufsatz der eingangs genannten Art dadurch gelöst, dass der Aufsatz ein Gestell und ein Gehäuse aufweist, das mit dem Gestell verbunden ist und das durch das Gestell oberhalb einer Wärmequelle platzierbar ist, wobei das Gehäuse an seiner dem Gestell zugewandten Unterseite einen Gehäuseboden aufweist, in dem mindestens eine Warmlufteinlassöffnung ausgebildet ist, und an seiner gegenüberliegenden Oberseite eine mit dem Gehäuseboden verbundene Gehäusedecke aufweist, und das Gehäuse seitlich mindestens eine Warmluftauslassöffnung umfasst, wobei der Aufsatz mindestens einen aktiven Lüfter aufweist, und der mindestens eine aktive Lüfter und das Gehäuse derart ausgebildet und relativ zueinander angeordnet sind, dass mit Hilfe des mindestens einen aktiven Lüfters von der Wärmequelle bereitgestellte Warmluft durch die mindestens eine Warmlufteinlassöffnung ins Innere des Gehäuses und in Richtung der Gehäusedecke gefördert werden kann, um zu bewirken, dass die Warmluft an der Gehäusedecke umgelenkt wird und das Gehäuse über die wenigstens eine Warmluftauslassöffnung seitlich nach außen gerichtet verlässt.

Der Erfindung liegt also die Überlegung zugrunde, von der Wärmequelle nach oben steigende Warmluft oberhalb der Wärmequelle insbesondere gleichmäßig seitlich zu verteilen. Auf diese Weise wird ermöglicht, dass die Warmluft, die bisher einfach nach oben in die Umgebung entweicht, nachdem sie beispielsweise das auf einem Grill liegende Grillgut erhitzt hat, einer weiteren Verwendung zugeführt wird. Denn die seitlich verteilte Warmluft kann zum Beispiel dazu dienen, Personen zu wärmen, die sich um die Wärmequelle herum aufhalten. Durch den erfindungsgemäßen Aufsatz ergibt sich ein seitlich nach außen gerichteter Warmluftstrom mit einer verglichen mit einer Anordnung ohne Lüfter höheren Strömungsgeschwindigkeit.

Unter einem Lüfter ist jede Vorrichtung zu verstehen, die dazu in der Lage ist, einen insbesondere zumindest im Wesentlichen gerichteten Luftstrom zu erzeugen. Anstatt dem Begriff Lüfter kann auch der Begriff Ventilator verwendet werden. Beispielsweise kann ein Lüfter ein drehbar gelagertes Lüfterrad mit mindestens einem Lüfterflügel umfassen. Bei dem Lüfter kann es sich jedoch auch um einen flügellosen Lüfter handeln. Unter einem "aktiven Lüfter" ist ein Lüfter zu verstehen, der nicht oder zumindest nicht ausschließlich durch den von der Wärmequelle nach oben steigenden Warmluftstrom angetrieben wird. Bei dem aktiven Lüfter kann es sich beispielsweise um einen elektrisch betriebenen Lüfter handeln, der primär durch Zufuhr von elektrischer Energie angetrieben wird.

Bei einer feuerbasierten Wärmequelle kann es sich beispielsweise um einen kohle- oder gasbetriebenen Terrassenkamin, Grill oder Feuertisch, oder um eine kohlebetriebene Feuerschale handeln. Eine strombasierte Wärmequelle kann beispielsweise ein Elektrogrill sein.

Gemäß einer Ausgestaltung der Erfindung sind der mindestens eine aktive Lüfter und das Gehäuse derart ausgebildet und relativ zueinander angeordnet, dass mit Hilfe des mindestens einen aktiven Lüfters die Warmluft derart in Richtung der Gehäusedecke gefördert werden kann, dass die geförderte Warmluft zumindest im Wesentlichen orthogonal zur Gehäusedecke auf die Gehäusedecke auftrifft.

Zweckmäßigerweise ist die Gehäusedecke vollständig geschlossen ausgebildet. Dies ermöglicht, dass die gesamte, zumindest jedoch ein Großteil der durch die mindestens eine Warmlufteinlassöffnung ins Innere des Gehäuses und in Richtung der Gehäusedecke geförderte Warmluft das Gehäuse über die wenigstens eine Warmluftauslassöffnung seitlich verlässt.

Vorteilhafterweise ist die Gehäusedecke von dem Gestell weg nach oben gewölbt. Die Gehäusedecke weist bevorzugt zumindest im Wesentlichen die Form eines Kugelschalensegments auf. Diese Geometrie der Gehäusedecke trägt zu einer optimalen Umlenkung und einem optimalen Warmluftstrom in Richtung der seitlichen Warmluftauslassöffnungen bei.

In einer möglichen Ausgestaltung weist der Gehäuseboden einen zentralen Bereich, in dem die mindestens eine Warmlufteinlassöffnung ausgebildet ist, und einen diesen umgebenden Außenbereich, in dem keine Warmlufteinlassöffnungen ausgebildet sind, auf.

Es können mehrere Warmlufteinlassöffnungen vorgesehen sein, die entlang einer gedachten Ringlinie, insbesondere Kreisringlinie, oder mehrerer gedachter konzentrischer Ringlinien, insbesondere Kreisringlinien, in dem zentralen Bereich des Gehäusebodens ausgebildet sind.

Die Warmlufteinlassöffnungen einer Ringlinie können entlang der Ringlinie gleichmäßig voneinander beabstandet angeordnet sein. Es ist möglich, dass die Warmlufteinlassöffnungen einer Ringlinie übereinstimmende Öffnungsquerschnitte aufweisen. Der Öffnungsquerschnitt der Warmlufteinlassöffnungen unterschiedlicher Ringlinien kann sich unterscheiden. Vorzugsweise verringert sich der Öffnungsquerschnitt der Warmlufteinlassöffnungen in Radialrichtung von außen nach innen, d.h. umso kleiner der Radius einer gedachten Ringlinie ist, desto kleiner ist der Öffnungsquerschnitt der entsprechenden Warmlufteinlassöffnungen. Zweckmäßigerweise befindet sich in der Mitte der innersten Ringlinie ein einlassöffnungsfreier Bereich. In diesem einlassöffnungsfreien Bereich kann beispielsweise der mindestens eine Lüfter und/oder ein thermoelektrischer Wandler angeordnet werden.

Bevorzugt weist der zentrale Bereich des Gehäusebodens die Form einer runden, insbesondere kreisrunden Platte auf. Der Durchmesser der runden Platte ist vorzugsweise kleiner als 50 % des Außendurchmessers des Gehäuses.

Der Gehäuseboden kann zumindest abschnittsweise in Richtung des Gestells nach unten gewölbt sein.

Falls der Gehäuseboden einen zentralen Bereich und einen diesen umgebenden Außenbereich aufweist, ist der zentrale Bereich bevorzugt eben ausgebildet. Der Außenbereich des Gehäusebodens kann in Richtung des Gestells gewölbt ausgebildet sein und/oder zumindest im Wesentlichen die Form eines Hohlkegelstumpfes mit offenen Stirnseiten aufweisen. Diese Geometrie des Gehäusebodens trägt dazu bei, dass die Warmluft innerhalb des Gehäuses bestmöglich nach oben in Richtung der Gehäusedecke strömen kann.

Gemäß einer weiteren Ausführungsform der vorliegenden Erfindung weist das Gehäuse an seiner Unterseite mindestens einen Fortsatz auf und umfasst das Gestell an seiner dem Gehäuse zugewandten Oberseite mindestens eine zu dem Fortsatz korrespondierend ausgebildete Aufnahme, in welcher der Fortsatz aufgenommen ist.

Der zentrale Bereich des Gehäusebodens und der Außenbereich des Gehäusebodens können über eine insbesondere zylindermantelförmige Ringwand derart miteinander verbunden sein, dass der zentrale Bereich des Gehäusebodens gegenüber dem Außenbereich des Gehäusebodens in Richtung des Gestells versetzt ist, wodurch der mindestens eine Fortsatz an der Unterseite des Gehäuses durch den zentralen Bereich des Gehäusebodens und die Ringwand gebildet wird.

In einer möglichen Ausgestaltung weist das Gestell mindestens zwei axial voneinander beabstandet angeordnete Ringe, insbesondere Kreisringe, auf, die über mindestens eine Strebe, bevorzugt mindestens zwei Streben, beispielsweise drei Streben, miteinander verbunden sind. Die Ringe können konzentrisch zueinander angeordnet sein. Zweckmäßigerweise weist das Gestell mehrere in Umfangsrichtung seiner Ringe gleichmäßig voneinander beabstandete Streben auf, die bevorzugt dieselbe Länge aufweisen. Ein dem Gehäuse zugewandter Ring kann einen kleineren Außendurchmesser als ein weiter von dem Gehäuse entfernt angeordneter Ring aufweisen. Der Außendurchmesser der Ringe kann jeweils kleiner als der Außendurchmesser des Gehäuses sein.

Falls das Gehäuse einen Fortsatz aufweist und das Gestell eine Aufnahme umfasst, kann ein dem Gehäuse zugewandter Ring die Aufnahme des Gestells definieren, in welche der an der Unterseite des Gehäuses ausgebildete Fortsatz insbesondere formschlüssig, vorzugsweise mit Spiel, aufgenommen ist.

Das Gehäuse kann mit dem Gestell über eine Schraub- oder Steckverbindung lösbar verbunden sein. Auf diese Weise lässt sich das Gehäuse vom Gestell trennen, was beispielsweise eine einfache Lagerung des Aufsatzes ermöglicht.

Grundsätzlich kann ein Akku oder eine Batterie und/oder ein Netzstromanschluss vorgesehen sein, um den mindestens einen aktiven Lüfter mit Strom zu versorgen.

Wenn der mindestens eine aktive Lüfter ein elektrisch betriebener Lüfter ist, ist bevorzugt ein thermoelektrischer Wandler, vorzugsweise ein Peltier-Element, vorgesehen. Hierbei ist der thermoelektrische Wandler derart angeordnet, dass er aus der Wärmequelle stammende Wärmeenergie in elektrische Energie umwandeln kann, um den mindestens einen aktiven Lüfter mit elektrischer Energie zu versorgen. Es können auch mehrere Peltier-Elemente verwendet werden, die in geeigneter Weise elektrisch verbunden sind, um eine größere Menge an elektrischer Energie zu erzeugen.

Vorteilhafterweise ist der thermoelektrische Wandler mit seiner Warmseite wärmeleitend am Gehäuseboden, insbesondere im zentralen Bereich des Gehäusebodens, angebracht, wobei die Kaltseite des thermoelektrischen Wandlers von dem Gestell wegweist. Falls sich in der Mitte des zentralen Bereichs des Gehäusebodens ein einlassöffnungsfreier Bereich befindet, kann der thermoelektrische Wandler mit seiner Warmseite in diesem einlassöffnungsfreien Bereich wärmeleitend angebracht sein.

Zweckmäßigerweise ist der mindestens eine aktive Lüfter unmittelbar elektrisch mit dem thermoelektrischen Wandler verbunden, um durch den thermoelektrischen Wandler erzeugte elektrische Energie dem mindestens einen aktiven Lüfter ohne Zwischenspeicherung unmittelbar zur Verfügung zu stellen. Auf diese Weise kommt der mindestens eine aktive Lüfter und somit der erfindungsgemäße Aufsatz ohne externe Stromquelle aus. Darüber hinaus wird ein selbstregelnder Betrieb des mindestens einen aktiven Lüfters ermöglicht. Denn je größer die von der Wärmequelle erzeugte Wärmeenergie, desto größer ist auch die vom thermoelektrischen Wandler erzeugte elektrische Energie. Somit läuft der mindestens eine aktive Lüfter automatisch an, sobald ausreichend Wärmeenergie erzeugt wird. Sobald mehr Wärmeenergie erzeugt wird, dreht sich der mindestens eine aktive Lüfter automatisch schneller. Schließlich schaltet sich der mindestens eine aktive Lüfter automatisch ab, sobald nicht mehr genügend Wärmeenergie von der Wärmequelle erzeugt wird. Auf diese Weise steht zu jedem Zeitpunkt des Betriebs der Wärmequelle eine passende Lüfterleistung zur Verfügung.

Falls ein Akku vorgesehen ist, kann der thermoelektrische Wandler mit dem Akku elektrisch verbunden sein, um durch den thermoelektrischen Wandler erzeugte elektrische Energie in dem Akku zu speichern. Der mindestens eine aktive Lüfter kann mit dem Akku elektrisch verbunden sein, um durch den Akku mit elektrischer Energie versorgt zu werden.

Vorteilhaft ist der mindestens eine aktive Lüfter in der Nähe des thermoelektrischen Wandlers angeordnet. Insbesondere bildet der mindestens eine aktive Lüfter eine bauliche Einheit mit dem thermoelektrischen Wandler. Auf diese Weise müssen keine langen elektrischen Leitungen zwischen dem thermoelektrischen Wandler und dem mindestens einen aktiven Lüfter verlegt werden.

Der mindestens eine aktive Lüfter kann beispielsweise unterhalb der mindestens einen Warmlufteinlassöffnung oder innerhalb der mindestens einen Warmlufteinlassöffnung vorgesehen sein. Im ersteren Fall befindet sich der mindestens eine aktive Lüfter außerhalb des Gehäuses. Bevorzugt ist der mindestens eine aktive Lüfter im Gehäuse angeordnet. Der mindestens eine aktive Lüfter kann im Gehäuse oberhalb der mindestens einen Warmlufteinlassöffnung vorgesehen sein. Falls sich der Lüfter außerhalb des Gehäuses unterhalb der mindestens einen Wärmlufteinlassöffnung befindet, kann er dazu ausgebildet sein, von der Wärmequelle bereitgestellte Warmluft durch die mindestens eine Warmlufteinlassöffnung ins Innere des Gehäuses zu blasen. Falls sich der Lüfter innerhalb des Gehäuses oberhalb der mindestens einen Warmlufteinlassöffnung befindet, kann er dazu ausgebildet sein, von der Wärmequelle bereitgestellte Warmluft durch die mindestens eine Warmlufteinlassöffnung ins Innere des Gehäuses zu saugen.

In einer möglichen Ausgestaltung sind die Gehäusedecke und der Gehäuseboden in ihren Randbereichen über eine insbesondere zylindermantelförmige Umfangswand des Gehäuses miteinander verbunden. Zweckmäßigerweise ist die mindestens eine Warmluftauslassöffnung in der Umfangswand ausgebildet. Es können mehrere Warmluftauslassöffnungen in Umfangsrichtung des Gehäuses vorzugsweise gleichmäßig voneinander beabstandet, bevorzugt in mehreren parallelen Reihen, in der Umfangswand ausgebildet sein. Als Umfangswand kann beispielsweise ein Lochblech dienen.

Gemäß einer Ausführungsform der vorliegenden Erfindung weist das Gehäuse eine zumindest im Wesentlichen hohlzylindrische Form, insbesondere die Form eines Hohlzylinders mit zumindest einer, bevorzugt zwei, nach außen gewölbten Stirnfläche auf. Das Gehäuse weist insbesondere einen Außendurchmesser zwischen 50 und 100 cm, bevorzugt zwischen 70 und 80 cm, auf.

Vorteilhafterweise ist ein Schadstofffilter vorgesehen, der bevorzugt in der Nähe der mindestens einen Warmluftauslassöffnung angeordnet ist, um schädliche und/oder giftige Stoffe aus der von der Wärmequelle bereitgestellten Warmluft herauszufiltern.

Zweckmäßigerweise sind das Gestell und das Gehäuse aus einem hitzebeständigen Material gefertigt. Metall beispielsweise hat sich als besonders geeignet erwiesen.

Des Weiteren betrifft die Erfindung ein Kit mit einer Wärmequelle, insbesondere feuerbasierten und/oder strombasierten Wärmequelle, bevorzugt einem Terrassenkamin, einem Grill, einem Feuertisch und/oder einer Feuerschale, und einem erfindungsgemäßen Aufsatz.

Darüber hinaus betrifft die Erfindung eine Verwendung eines erfindungsgemäßen Aufsatzes, um von einer Wärmequelle, insbesondere feuerbasierten und/oder strombasierten Wärmequelle, bevorzugt einem Terrassenkamin, einem Grill, einem Feuertisch und/oder einer Feuerschale, nach oben steigende Warmluft seitlich abzulenken und/oder seitlich zu verteilen.

Weitere Merkmale und Vorteile der vorliegenden Erfindung werden anhand der nachfolgenden Beschreibung einer Ausführungsform eines erfindungsgemäßen Aufsatzes unter Bezugnahme auf die beiliegende Zeichnung deutlich. Darin zeigt:
- Figur 1: eine perspektivische Ansicht eines Aufsatzes gemäß einer Ausführungsform der vorliegenden Erfindung mit der Gehäusedecke des Aufsatzes nach vorne,
- Figur 2: eine perspektivische Ansicht des Aufsatzes aus Figur 1 mit nach oben abgehobener Gehäusedecke,
- Figur 3: eine perspektivische Ansicht des Aufsatzes aus den Figuren 1 und 2 mit dem Gehäuseboden des Aufsatzes nach vorne,
- Figur 4: eine Untersicht des Aufsatzes aus den Figuren 1 bis 3,
- Figur 5: eine Seitenansicht des Aufsatzes aus den Figuren 1 bis 4,
- Figur 6: eine Schnittansicht entlang der Schnittlinie V-V in Figur 5 und
- Figur 7: eine perspektivische Ansicht eines Kits mit einer Wärmequelle und dem Aufsatz aus den Figuren 1 bis 6.

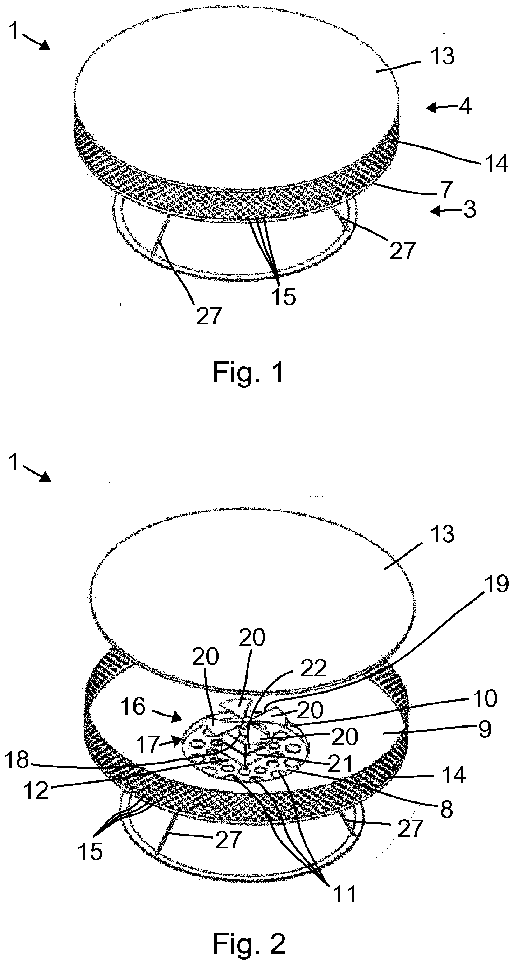

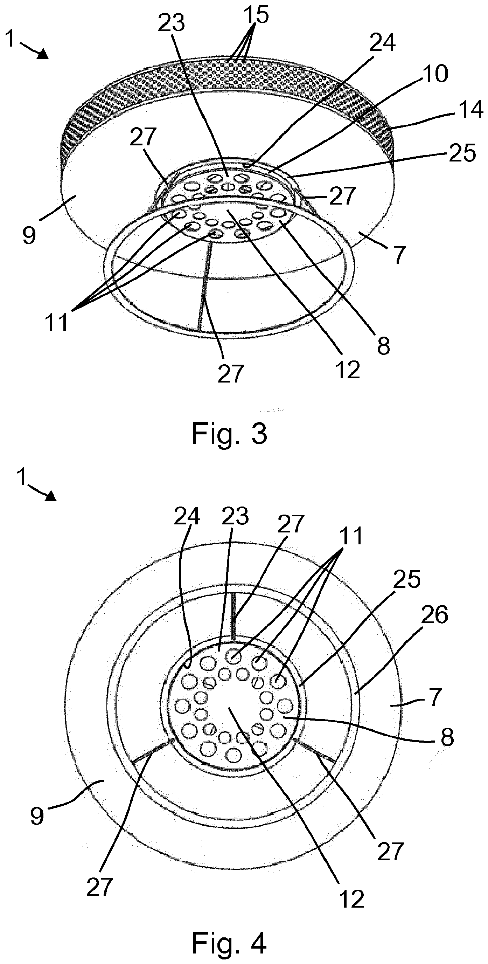

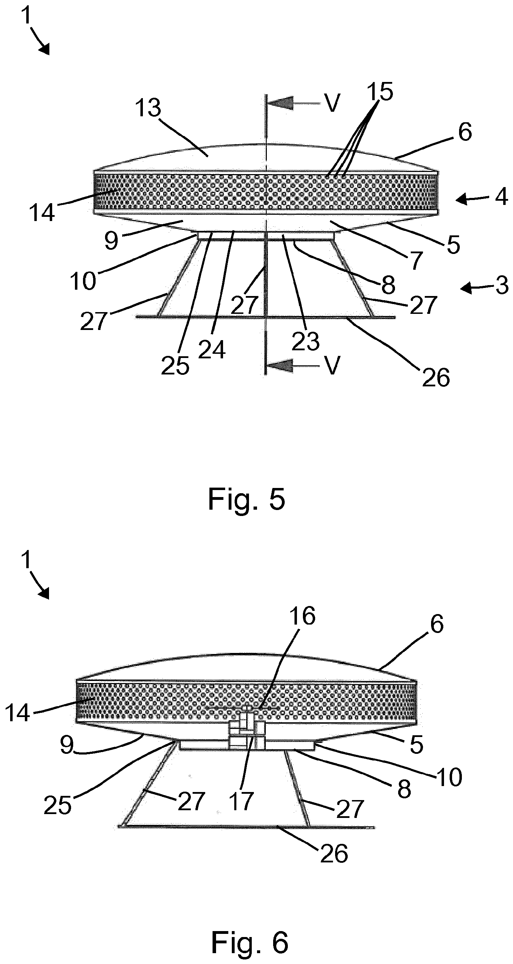

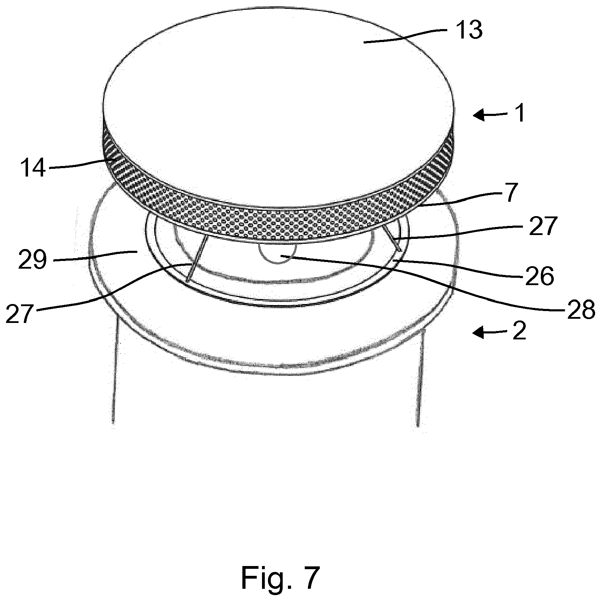

Die Figuren 1 bis 6 zeigen einen Aufsatz 1 für eine Wärmequelle 2, insbesondere feuerbasierte und/oder strombasierte Wärmequelle 2, die ausgebildet ist, um nach oben steigende Warmluft bereitzustellen, bevorzugt für einen Terrassenkamin, einen Grill, einen Feuertisch und/oder eine Feuerschale, gemäß einer Ausführungsform der vorliegenden Erfindung. Eine Wärmequelle 2 in Form eines Terrassenkamins ist in Figur 7 zusammen mit dem Aufsatz 1 gezeigt.

Der Aufsatz 1 umfasst ein Gestell 3 und ein mit diesem verbundenes Gehäuse 4, die beide aus einem hitzebeständigen Material, vorliegend Metall gefertigt sind. Das Gehäuse 4 weist bei dem dargestellten Ausführungsbeispiel die Form eines Hohlzylinders mit nach außen gewölbten unteren und oberen Stirnflächen 5, 6 auf. An der dem Gestell 3 zugewandten Unterseite des Gehäuses 4 ist ein Gehäuseboden 7 vorgesehen, der einen ebenen zentralen Bereich 8 und einen diesen umgebenden Außenbereich 9 aufweist, die über eine zylinderförmige Ringwand 10 derart miteinander verbunden sind, dass der zentrale Bereich 8 gegenüber dem Außenbereich 9 in Richtung des Gestells 4 versetzt ist.

In dem zentralen Bereich 8 des Gehäusebodens 7 sind vierundzwanzig runde Warmlufteinlassöffnungen 11 entlang zweier gedachter konzentrischer Kreisringlinien ausgebildet. Hierbei sind die Warmlufteinlassöffnungen 11 einer Kreisringlinie entlang der Kreisringlinie gleichmäßig voneinander beabstandet angeordnet. Darüber hinaus weisen die Warmlufteinlassöffnungen 11 einer Ringlinie übereinstimmende Öffnungsquerschnitte auf, wobei der Öffnungsquerschnitt der Warmlufteinlassöffnungen 11 entlang der inneren Kreisringlinie geringer ist als der Öffnungsquerschnitt der Warmlufteinlassöffnungen 11 entlang der äußeren Kreisringlinie. In der Mitte der inneren Kreisringlinie befindet sich ein einlassöffnungsfreier Bereich 12. Mit anderen Worten weist der zentrale Bereich 8 des Gehäusebodens 7 die Form einer kreisrunden Lochplatte auf, deren Durchmesser vorliegend kleiner ist als 50 % des Außendurchmessers des Gehäuses 3, wobei der Außendurchmesser des Gehäuses 3 vorliegend zwischen 70 und 80 cm beträgt.

Der Außenbereich 9 des Gehäusebodens 7 weist vorliegend die Form eines Hohlkegelstumpfes mit offenen Stirnseiten auf. In dem Außenbereich 9 sind keine Warmlufteinlassöffnungen 11 ausgebildet.

An der dem Gestell 3 abgewandten Oberseite des Gehäuses 4 ist eine vollständig geschlossen ausgebildete Gehäusedecke 13 vorgesehen, die von dem Gestell 3 weg nach oben gewölbt ist und die Form eines Kugelschalensegments aufweist.

Des Weiteren umfasst das Gehäuse 4 eine zylindermantelförmige Umfangswand 14, über die der Gehäuseboden 7 und die Gehäusedecke 13 in ihren Randbereichen miteinander verbunden sind. Zudem weist das Gehäuse 4 seitlich eine Vielzahl von Warmluftauslassöffnungen 15 auf, die in Umfangsrichtung des Gehäuses 4 gleichmäßig voneinander beabstandet in acht parallelen Reihen in der Umfangswand 14 ausgebildet sind. Als Umfangswand 14 dient vorliegend ein Lochblech.

Darüber hinaus weist der Aufsatz 1 einen elektrisch betriebenen aktiven Lüfter 16 und einen thermoelektrischen Wandler, vorliegend ein Peltier-Element 17, auf. Hierbei bildet der aktive Lüfter 16 eine bauliche Einheit mit dem Peltier-Element 17 und ist mit diesem unmittelbar elektrisch verbunden. Der aktive Lüfter 16 umfasst einen Elektromotor 18 und ein Lüfterrad 19 mit vier Flügeln 20, das an einer nicht dargestellten Abtriebswelle des Elektromotors 18 fixiert und somit durch den Elektromotor 18 in Rotation versetzbar ist. Das Peltier-Element 17 ist mit seiner Warmseite 21 wärmeleitend im einlassöffnungsfreien Bereich 12 des zentralen Bereichs 8 des Gehäusebodens 7 angebracht, wobei die Kaltseite 22 des Peltier-Elements 17 von dem Gestell 3 wegweist. Der aktive Lüfter 16 ist im Bereich der Kaltseite 22 des Peltier-Elements 17 derart angeordnet, dass die Flügel 20 des Lüfterrads 19 des aktiven Lüfters 16 das Peltier-Element 17 in Radialrichtung überragen. Somit befinden sich sowohl das Peltier-Element 17 als auch der aktive Lüfter 16 innerhalb des Gehäuses 4 oberhalb des zentralen Bereichs 8 des Gehäusebodens 7.

Das Gehäuse 4 weist an seiner Unterseite einen Fortsatz 23 auf und das Gestell 3 umfasst an seiner dem Gehäuse 4 zugewandten Oberseite eine zu dem Fortsatz 23 korrespondierend ausgebildete Aufnahme 24, in welcher der Fortsatz 23 aufgenommen ist. Hierbei wird der Fortsatz 23 des Gehäuses 4 durch den zentralen Bereich 8 und die Ringwand 10 des Gehäusebodens 7 gebildet. Das Gestell 3 weist zwei axial voneinander beabstandet angeordnete Kreisringe 25, 26 auf, die über drei Streben 27 miteinander verbunden sind. Die Streben 27 sind in Umfangsrichtung des Gestells 3 gleichmäßig voneinander beabstandet angeordnet und weisen dieselbe Länge auf. Die beiden Kreisringe 25, 26 sind konzentrisch zueinander angeordnet. Der dem Gehäuse 4 zugewandte Kreisring 25 weist einen kleineren Außendurchmesser als der von dem Gehäuse 4 entfernt angeordnete Kreisring 26 auf. Der Außendurchmesser der beiden Kreisringe 25, 26 ist jeweils kleiner als der Außendurchmesser des Gehäuses 4. Der dem Gehäuse 4 zugewandte Kreisring 25 definiert die Aufnahme 24 des Gestells 3, in welcher der an der Unterseite des Gehäuses 4 ausgebildete Fortsatz 23 aufgenommen ist. Das Gehäuse 4 ist sozusagen auf das Gestell 3 aufgesteckt und auf diese Weise lösbar mit dem Gestell 3 verbunden.

Die Figur 7 zeigt ein Kit 28 mit einer feuerbasierten Wärmequelle 2, vorliegend einem Terrassenkamin mit gasbetriebenem Brenner 29, und dem zuvor beschriebenen erfindungsgemäßen Aufsatz 1, der mit seinem Gestell 3 mittig auf der Oberseite 30 des Terrassenkamins steht. Das Gehäuse 4 des Aufsatzes 1 ist durch das Gestell 3 in einem definierten Abstand zu dem Terrassenkamin oberhalb des Brenners 29 platziert.

Beim Betrieb der Wärmequelle 2 steigt die bei der Verbrennung eines Gas/Luft-Gemisches entstehende Warmluft beziehungsweise Verbrennungsluft nach oben in Richtung des Gehäuses 4 des Aufsatzes 1. Gleichzeitig wird der zentrale Bereich 8 des Gehäusebodens 7 durch die von der Wärmequelle 2 erzeugte Wärmeenergie erhitzt. Da das Peltier-Element 17 mit seiner Warmseite 21 wärmeleitend im zentralen Bereich 8 des Gehäusebodens 7 angebracht ist, ist das Peltier-Element 17 dazu in der Lage, von der Wärmequelle 2 stammende Wärmeenergie in elektrische Energie umzuwandeln. Die durch das Peltier-Element 17 erzeugte elektrische Energie wird dem aktiven Lüfter 16 ohne Zwischenspeicherung unmittelbar zur Verfügung gestellt, um das Lüfterrad 19 des aktiven Lüfters 16 in Rotation zu versetzen. Mit Hilfe des aktiven Lüfters 16 wird nun von der Wärmequelle 2 bereitgestellte Warmluft durch die Warmlufteinlassöffnungen 11 im zentralen Bereich 8 des Gehäusebodens 7 ins Innere des Gehäuses 4 und in Richtung der Gehäusedecke 13 gefördert. Genauer gesagt saugt der aktive Lüfter 16 die Warmluft durch die Warmlufteinlassöffnungen 11 ins Innere des Gehäuses 4 und bläst die Warmluft dann in Richtung der Gehäusedecke 13. Die geförderte Warmluft trifft zumindest im Wesentlichen orthogonal auf die Gehäusedecke 13 auf und wird dann an der Gehäusedecke 13 umgelenkt, d.h. seitlich abgelenkt, und seitlich verteilt. Hierzu trägt die gewölbte Form der Gehäusedecke 13 bei. Schließlich verlässt die Warmluft das Gehäuse 4 über die Warmluftauslassöffnungen 15 in der Umfangswand 14 des Gehäuses 4 seitlich nach außen gerichtet. Mit anderen Worten wird die Warmluft nach außen weg in die Umgebung hinaus geblasen.

### Bezugszeichenliste

- 1: Aufsatz
- 2: Wärmequelle
- 3: Gestell
- 4: Gehäuse
- 5: untere Stirnfläche
- 6: obere Stirnfläche
- 7: Gehäuseboden
- 8: zentraler Bereich
- 9: Außenbereich
- 10: Ringwand
- 11: Warmlufteinlassöffnung
- 12: einlassöffnungsfreier Bereich
- 13: Gehäusedecke
- 14: Umfangswand
- 15: Warmluftauslassöffnung
- 16: Lüfter
- 17: Peltier-Element
- 18: Elektromotor
- 19: Lüfterrad
- 20: Flügel
- 21: Warmseite
- 22: Kaltseite
- 23: Fortsatz
- 24: Aufnahme
- 25: Kreisring
- 26: Kreisring
- 27: Strebe
- 28: Kit
- 29: Brenner
- 30: Oberseite

## Patentansprüche

1. Aufsatz (1) für eine Wärmequelle (2), insbesondere feuerbasierte und/oder strombasierte Wärmequelle (2), die ausgebildet ist, um nach oben steigende Warmluft bereitzustellen, bevorzugt für einen Terrassenkamin, einen Grill, einen Feuertisch und/oder eine Feuerschale, **dadurch gekennzeichnet, dass** der Aufsatz (1) ein Gestell (3) und ein Gehäuse (4) aufweist, das mit dem Gestell (3) verbunden ist und das durch das Gestell (3) oberhalb einer Wärmequelle (2) platzierbar ist, wobei das Gehäuse (4) an seiner dem Gestell (3) zugewandten Unterseite einen Gehäuseboden (7) aufweist, in dem mindestens eine Warmlufteinlassöffnung (11) ausgebildet ist, und an seiner gegenüberliegenden Oberseite eine mit dem Gehäuseboden (7) verbundene Gehäusedecke (13) aufweist, und das Gehäuse (4) seitlich mindestens eine Warmluftauslassöffnung (15) umfasst, wobei der Aufsatz (1) mindestens einen aktiven Lüfter (16) aufweist, und der mindestens eine aktive Lüfter (16) und das Gehäuse (4) derart ausgebildet und relativ zueinander angeordnet sind, dass mit Hilfe des mindestens einen aktiven Lüfters (16) von der Wärmequelle (2) bereitgestellte Warmluft durch die mindestens eine Warmlufteinlassöffnung (11) ins Innere des Gehäuses (4) und in Richtung der Gehäusedecke (13) gefördert werden kann, um zu bewirken, dass die Warmluft an der Gehäusedecke (13) umgelenkt wird und das Gehäuse (4) über die wenigstens eine Warmluftauslassöffnung (15) seitlich nach außen gerichtet verlässt.

2. Aufsatz (1) nach Anspruch 1, **dadurch gekennzeichnet, dass** der mindestens eine aktive Lüfter (16) und das Gehäuse (4) derart ausgebildet und relativ zueinander angeordnet sind, dass mit Hilfe des mindestens einen aktiven Lüfters (16) die Warmluft derart in Richtung der Gehäusedecke (13) gefördert werden kann, dass die geförderte Warmluft zumindest im Wesentlichen orthogonal zur Gehäusedecke (13) auf die Gehäusedecke (13) auftrifft und/oder dass die Gehäusedecke (13) vollständig geschlossen ausgebildet ist, und/oder dass die Gehäusedecke (13) von dem Gestell (3) weg nach oben gewölbt ist, wobei die Gehäusedecke (13) bevorzugt zumindest im Wesentlichen die Form eines Kugelschalensegments aufweist, und/oder dass die Gehäusedecke (13) und der Gehäuseboden (7) in ihren Randbereichen über eine insbesondere zylindermantelförmige Umfangswand (14) des Gehäuses (4) miteinander verbunden sind, bevorzugt, wobei die mindestens eine Warmluftauslassöffnung (15) in der Umfangswand (14) ausgebildet ist, wobei insbesondere mehrere Warmluftauslassöffnungen (15) in Umfangsrichtung des Gehäuses (4) vorzugsweise gleichmäßig voneinander beabstandet, bevorzugt in mehreren parallelen Reihen, in der Umfangswand (14) ausgebildet sind.

3. Aufsatz (1) nach einem der vorhergehenden Ansprüche, **dadurch gekennzeichnet, dass** der Gehäuseboden (7) einen zentralen Bereich (8), der bevorzugt die Form einer runden, insbesondere kreisrunden Platte aufweist, und in dem die mindestens eine Warmlufteinlassöffnung (11) ausgebildet ist, und einen den zentralen Bereich (8) umgebenden Außenbereich (9), in dem keine Warmlufteinlassöffnungen (11) ausgebildet sind, aufweist, bevorzugt, wobei mehrere Warmlufteinlassöffnungen (11) vorgesehen sind, die entlang einer gedachten Ringlinie, insbesondere Kreisringlinie, oder mehrerer gedachter konzentrischer Ringlinien, insbesondere Kreisringlinien, in dem zentralen Bereich (8) des Gehäusebodens (7) ausgebildet sind, besonders bevorzugt, wobei die Warmlufteinlassöffnungen (11) einer Ringlinie entlang der Ringlinie gleichmäßig voneinander beabstandet angeordnet sind, und/oder dass sich in der Mitte der innersten Ringlinie ein einlassöffnungsfreier Bereich (12) befindet, und/oder dass die Warmlufteinlassöffnungen (11) einer Ringlinie übereinstimmende Öffnungsquerschnitte aufweisen, wobei sich der Öffnungsquerschnitt der Warmlufteinlassöffnungen (11) unterschiedlicher Ringlinien insbesondere unterscheidet, der Öffnungsquerschnitt sich vorzugsweise in Radialrichtung von außen nach innen verringert.

4. Aufsatz (1) nach einem der vorhergehenden Ansprüche, **dadurch gekennzeichnet, dass** der Gehäuseboden (7) zumindest abschnittsweise in Richtung des Gestells (3) nach unten gewölbt ist.

5. Aufsatz (1) nach Anspruch 3 und 4, **dadurch gekennzeichnet, dass** der zentrale Bereich (8) des Gehäusebodens (7) eben ausgebildet ist, und der Außenbereich (9) des Gehäusebodens (7) in Richtung des Gestells (3) gewölbt ausgebildet ist und/oder zumindest im Wesentlichen die Form eines Hohlkegelstumpfes mit offenen Stirnseiten aufweist.

6. Aufsatz (1) nach einem der vorhergehenden Ansprüche, **dadurch gekennzeichnet, dass** das Gehäuse (4) an seiner Unterseite mindestens einen Fortsatz (23) aufweist und das Gestell (3) an seiner dem Gehäuse (4) zugewandten Oberseite mindestens eine zu dem Fortsatz (23) korrespondierend ausgebildete Aufnahme (24) umfasst, in welcher der Fortsatz (23) aufgenommen ist.

7. Aufsatz (1) nach Anspruch 6 und Anspruch 3, Anspruch 4, sofern auf Anspruch 3 rückbezogen, oder Anspruch 5, **dadurch gekennzeichnet, dass** der zentrale Bereich (8) des Gehäusebodens (7) und der Außenbereich (9) des Gehäusebodens (7) über eine insbesondere zylindermantelförmige Ringwand (10) derart miteinander verbunden sind, dass der zentrale Bereich (8) des Gehäusebodens (7) gegenüber dem Außenbereich (9) des Gehäusebodens (7) in Richtung des Gestells (3) versetzt ist, wodurch der mindestens eine Fortsatz (23) an der Unterseite des Gehäuses (4) durch den zentralen Bereich (8) des Gehäusebodens (7) und die Ringwand (10) gebildet wird.

8. Aufsatz (1) nach einem der vorhergehenden Ansprüche, **dadurch gekennzeichnet, dass** das Gestell (3) mindestens zwei axial voneinander beabstandet angeordnete Ringe (25, 26), insbesondere Kreisringe, aufweist, die über mindestens eine Strebe (27), bevorzugt mindestens zwei Streben (27), miteinander verbunden sind, und die bevorzugt konzentrisch zueinander angeordnet sind, bevorzugt, wobei das Gestell (3) mehrere in Umfangsrichtung seiner Ringe (25, 26) gleichmäßig voneinander beabstandete Streben (27) aufweist, die bevorzugt dieselbe Länge aufweisen, und/oder dass ein dem Gehäuse (4) zugewandter Ring (25) einen kleineren Außendurchmesser als ein weiter von dem Gehäuse (4) entfernt angeordneter Ring (26) aufweist, und/oder dass der Außendurchmesser der Ringe (25, 26) jeweils kleiner als der Außendurchmesser des Gehäuses (4) ist.

9. Aufsatz (1) nach Anspruch 7 und 8, **dadurch gekennzeichnet, dass** ein dem Gehäuse (4) zugewandter Ring (25) die Aufnahme (24) des Gestells (3) definiert, in welcher der an der Unterseite des Gehäuses (4) ausgebildete Fortsatz (23) insbesondere formschlüssig, vorzugsweise mit Spiel, aufgenommen ist.

10. Aufsatz (1) nach einem der vorhergehenden Ansprüche, **dadurch gekennzeichnet, dass** ein Akku oder eine Batterie und/oder ein Netzstromanschluss vorgesehen ist, um den mindestens einen aktiven Lüfter (16) mit Strom zu versorgen.

11. Aufsatz (1) nach einem der vorhergehenden Ansprüche, **dadurch gekennzeichnet, dass** der mindestens eine aktive Lüfter (16) ein elektrisch betriebener Lüfter (16) ist und ein thermoelektrischer Wandler (17), bevorzugt ein Peltier-Element, vorgesehen ist, wobei der thermoelektrische Wandler (17) derart angeordnet ist, dass er aus der Wärmequelle (2) stammende Wärmeenergie in elektrische Energie umwandeln kann, um den mindestens einen aktiven Lüfter (16) mit elektrischer Energie zu versorgen, bevorzugt, wobei der thermoelektrische Wandler (17) mit seiner Warmseite (21) wärmeleitend am Gehäuseboden (7), insbesondere im zentralen Bereich (8) des Gehäusebodens (7), angebracht ist, wobei die Kaltseite (22) des thermoelektrischen Wandlers (17) von dem Gestell (3) wegweist, und/oder der mindestens eine aktive Lüfter (16) unmittelbar elektrisch mit dem thermoelektrischen Wandler (17) verbunden ist, um durch den thermoelektrischen Wandler (17) erzeugte elektrische Energie dem mindestens einen aktiven Lüfter (16) ohne Zwischenspeicherung unmittelbar zur Verfügung zu stellen, und/oder der mindestens eine aktive Lüfter (16) in der Nähe des thermoelektrischen Wandlers (17) angeordnet ist, insbesondere eine bauliche Einheit mit dem thermoelektrischen Wandler (17) bildet.

12. Aufsatz (1) nach Anspruch 10 und 11, **dadurch gekennzeichnet, dass** der thermoelektrische Wandler (17) mit dem Akku elektrisch verbunden ist, um durch den thermoelektrischen Wandler (17) erzeugte elektrische Energie in dem Akku zu speichern, und der mindestens eine aktive Lüfter (16) mit dem Akku elektrisch verbunden ist, um durch den Akku mit elektrischer Energie versorgt zu werden.

13. Aufsatz (1) nach einem der vorhergehenden Ansprüche, **dadurch gekennzeichnet, dass** das Gehäuse (4) eine zumindest im Wesentlichen hohlzylindrische Form, insbesondere die Form eines Hohlzylinders mit zumindest einer, bevorzugt zwei, nach außen gewölbten Stirnfläche (5, 6) aufweist, wobei das Gehäuse (4) insbesondere einen Außendurchmesser zwischen 50 und 100 cm, bevorzugt zwischen 70 und 80 cm, aufweist, und/oder dass ein Schadstofffilter vorgesehen ist, der bevorzugt in der Nähe der mindestens einen Warmluftauslassöffnung (15) angeordnet ist, um schädliche und/oder giftige Stoffe aus der von der Wärmequelle (2) bereitgestellten Warmluft herauszufiltern, und/oder dass das Gestell (3) und das Gehäuse (4) aus einem hitzebeständigen Material gefertigt sind, und/oder dass der mindestens eine aktive Lüfter (16) unterhalb der mindestens einen Warmlufteinlassöffnung (11), innerhalb der mindestens einen Warmlufteinlassöffnung (11) oder im Gehäuse (4) oberhalb der mindestens einen Warmlufteinlassöffnung (11) vorgesehen ist, und/oder dass das Gehäuse (4) mit dem Gestell (3) über eine Schraub- oder Steckverbindung lösbar verbunden ist.

14. Kit (28) mit einer Wärmequelle (2), insbesondere feuerbasierten und/oder strombasierten Wärmequelle (2), bevorzugt einem Terrassenkamin, einem Grill, einem Feuertisch und/oder einer Feuerschale, und einem Aufsatz (1) nach einem der vorhergehenden Ansprüche.

15. Verwendung eines Aufsatzes (1) nach einem der Ansprüche 1 bis 13, um von einer Wärmequelle (2), insbesondere feuerbasierten und/oder strombasierten Wärmequelle (2), bevorzugt einem Terrassenkamin, einem Grill, einem Feuertisch und/oder einer Feuerschale, nach oben steigende Warmluft seitlich abzulenken und/oder seitlich zu verteilen.
